Europäisches Patentamt

European Patent Office

Office européen des brevets

(19)

(11) Publication number: 0 329 027
A2

# (12) EUROPEAN PATENT APPLICATION

(21) Application number: 89102284.0

(22) Date of filing: 10.02.89

(51) Int. Cl.4: C08L 57/00 , C08L 63/00 , C08J 3/02

(30) Priority: 18.02.88 US 157469

(43) Date of publication of application:
23.08.89 Bulletin 89/34

(84) Designated Contracting States:
AT CH DE ES FR GB IT LI

(71) Applicant: BASF Aktiengesellschaft
Carl-Bosch-Strasse 38
D-6700 Ludwigshafen(DE)

(72) Inventor: Pillon, Lilianna Z.
1445 Errol Rd. East
Sarnia Ontario(CA)
Inventor: Slooten, Hans Simon Gerard
Van der Goesstraat 39
NL-6921 MK Duiven(NL)

(54) Epoxide crosslinkable latices.

(57) It is known to crosslink polymers containing carboxylic acid groups using reactive resins or agents. Usually, such systems contain or generate formaldehyde. It has now been proposed to crosslink such polymers with polyhydric esters of non terminal epoxides of long chain unsaturated fats or oils. Such epoxides have a low solubility in water and are less prone to hydrolysis. The compound may optionally contain a catalyst and the polymer will crosslink when heated at temperatures up to 150°C for less than 30 minutes.

EP 0 329 027 A2

## EPOXIDE CROSSLINKABLE LATICES

The present invention relates to crosslinking aqueous polymeric dispersions. More particularly, the present invention relates to crosslinking such polymers using di and triesters of polyhydric alcohols of non terminal epoxidized oils or fats.

It is known to crosslink carboxylated polymers using a number of different systems or agents. Crosslinking resins such as urea/formaldehyde or melamine/formaldehyde are well known. Additionally, it is known to incorporate into the backbone of the polymer crosslinking monomers such as the alkylol-amide groups. Such crosslinking systems have come under increasing pressure due to the concern about the potential to release formaldehyde.

There have been a number of recent patents proposing the use of various crosslinking agents including oxazolines, imidazolidone, and aziridines. Representative of this art are the abstracts of EP 176 609; Australian Patent 85 46 976 and U.S. 4,605,698.

It is known that epoxides may crosslink carboxylated polymers. Generally to obtain higher rates of reaction, terminal epoxides have been used as crosslinking agents. While such agents are useful to crosslink dry carboxylated polymers, they are not particularly useful in aqueous systems. The epoxide ring tends to open at acid or alkali pHs to form hydroxyl groups which have a lower reactivity. Thus, the problem to overcome is the sensitivity of epoxides to water.

U.S. Patent 3,215,647 discloses that liquid epoxy resins may be used as co-reactive material with latices of carboxylated polymers (col. 4, line 37). Liquid epoxy resins are low molecular weight adjuncts of epihalohydrins and bisphenols. These compounds have internal hydroxy groups and terminal epoxide groups. The terminal epoxide groups tend to hydrolyze to hydroxyl groups under acid or basic conditions. The present patent application does not contemplate the use of such terminal epoxide groups.

Example 4 of U.S. Patent 3,369,957 issued February 20, 1968, assigned to Owens Corning Fiberglass teaches coating a glass fabric with a size composition of an ethyl acrylate acrylic acid copolymer and epoxidized soya oil in a 1:1 weight ratio. The coating is cured at 250° F. The patent does not disclose why epoxidized soya oil was selected nor does it suggest a particular advantage to using soya oil. The amount of epoxidized soya oil used in the reference is significantly greater than that required in the present invention.

It is known to incorporate epoxides of esters of fatty acids into various plastics to act as plasticizers and/or heat and light stabilizers. Methods for preparing such epoxidized esters are disclosed in British Patent 790,063 published February 5, 1958 in the name of Rohm and Haas Company.

There are a number of curing agents known for curing non-aqueous epoxide resins. Unfortunately, many of these systems have to be used in the absence of water.

Applicant seeks to provide an aqueous based polymer system which is cross-linkable with an epoxide and optionally a cure system or accelerator. The system has a reasonable pot life at low temperature and cures relatively quickly at moderate temperature. Polymers cured in accordance with the present invention have improved resistance to water and organic solvents.

The present invention provides an aqueous dispersion of a polymer and a curing system having a good pot life and being curable on heating at a temperature from 75 to 150° C for times from 5 to 30 minutes comprising per 100 parts by dry weight of an aqueous dispersion of one or more polymeric solids selected from the group consisting of:

(A) polymers comprising:

    (i) 20 to 80 weight percent of one or more $C_{8-12}$ vinyl or vinylidene aromatic monomers which may be unsubstituted or substituted by a chlorine atom or a $C_{1-4}$ alkyl radical;

    (ii) from 80 to 20 weight percent of one or more $C_{4-6}$ aliphatic conjugated diolefins which are unsubstituted or substituted by a chlorine atom;

    (iii) from 0.5 to 15 weight percent of one or more $C_{3-6}$ ethylenically unsaturated carboxylic acids or anhydrides; and

    (iv) optionally up to 10 weight percent of one or more monomers selected from the group consisting of:

        (a) $C_{3-6}$ ethylenically unsaturated aldehydes;

2

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(c) $C_{1-8}$ alkyl and hydroxyalkyl esters of $C_{3-6}$ ethylenically unsaturated carboxylic acids.

(B) polymers comprising:

(i) 20-45 weight percent of a $C_{3-8}$ alkenyl nitrile;

(ii) from 80 to 55 weight percent of one or more $C_{4-6}$ aliphatic conjugated diolefins which are unsubstituted or substituted by a chlorine atom; and

(iii) from 0.5 to 15 weight percent of $C_{3-6}$ ethylenically unsaturated carboxylic acids or anhydrides

(C) polymers comprising:

(i) at least 75 weight percent of a mixture comprising:

(a) 100 to 50 weight percent of one or more monomers selected from the group consisting of $C_{1-8}$ alkyl and hydroxyl alkyl esters of $C_{3-6}$ ethylenically unsaturated carboxylic acids and $C_{2-8}$ alkenyl and hydroxyalkenyl esters of $C_{1-8}$ saturated carboxylic acids;

(b) up to 50 weight percent of one or more $C_{8-12}$ vinyl or vinylidene aromatic monomers which may be unsubstituted or substituted by a chlorine atom or a $C_{1-4}$ alkyl radical;

(ii) from 0.5 to 25 weight percent of one or more $C_{3-6}$ ethylenically unsaturated carboxylic acids or anhydrides;

(iii) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(D) polymers comprising:

(i) from 5 to 40 weight percent of a $C_{2-3}$ olefin;

(ii) from 95 to 60 weight percent of one or more monomers selected from the group consisting of $C_{1-8}$ alkyl and hydroxyalkyl esters of $C_{3-6}$ ethylenically unsaturated carboxylic acids, and $C_{2-8}$ alkenyl and hydroxy alkenyl esters of $C_{1-8}$ saturated carboxylic acids;

(iii) from 0.5 to 15 weight percent of $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(E) polymers comprising:

(i) at least 75 weight percent of one or more monomers selected from the group consisting of vinyl chloride and vinylidene chloride; and

(ii) up to 20 weight percent of one or more monomers selected from the group consisting of $C_{1-8}$ alkyl and hydroxyalkyl esters of $C_{3-6}$ ethylenically unsaturated carboxylic acid;

3

(iii) from 0.5 to 25 weight percent of one or more $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

up to 10 preferably from 2 to 5, most preferably from 2-3 parts by weight per 100 part by weight of a said polymer of one or more polyhydric alcohol esters of non-terminal epoxides of $C_{12-25}$ fats or oils, containing at least two epoxy groups per ester chain. In a particularly preferred embodiment the system further comprises from 0.01 to 5 parts by weight of a catalyst selected from the group consisting of ammonium salts of $C_{1-6}$ aliphatic carboxylic acids; ammonium salts of $C_{7-10}$ aromatic carboxylic acids; and tetra $C_{1-4}$ alkyl ammonium salts.

Figures I (a) and (b) and II (a) and (b) are stress/strain curves for polymer films cured in accordance with the present invention. The types of polymers useful in accordance with the present invention may be broadly characterized as carboxylated polymers. The polymers may be characterized as carboxylated styrene-butadiene type polymers (X-SBR), carboxylated acrylonitrile-butadiene (X-NBR) type polymers, carboxylated acrylic type polymers (X-A), carboxylated vinyl ester type (XVA) polymers, carboxylated ethylene vinyl ester polymers, carboxylated ethylene acrylate polymers (X-EA), and carboxylated vinyl or vinylidene type polymers (XVCl or XVDCl).

Apart from the acrylate and vinyl or vinylidene chloride polymers, the polymers of the present invention will generally contain from 0.5 to 15, preferably from 0.5 to 5 weight percent of one or more $C_{3-6}$ ethylenically unsaturated carboxylic acids. Some ethylenically unsaturated carboxylic acids are: acrylic acid, methacrylic acid, fumaric acid, and itaconic acid. The acrylate, vinyl and vinylidene type polymers may contain up to about 25, preferably less than 10, most preferably from 0.5 to 5 weight percent of such ethylenically unsaturated carboxylic acids.

Styrene-butadiene type polymers comprise in addition to carboxylic acids from 20 to 80, preferably 40 to 60 weight percent of one or more vinyl or vinylidene aromatic monomers such as styrene, alpha methyl styrene, and chlorostyrene; and from 80 to 20 preferably from 60 to 40 weight percent of one or more $C_{4-6}$ conjugated diolefins which may be unsubstituted or substituted by a chlorine atom. Suitable diolefins include butadiene, isoprene and chloroprene.

Acrylonitrile-butadiene type polymers comprise in addition to the carboxylic acid from 20 to 45 preferably 20 to 35 weight percent of one or more $C_{3-8}$ alkenyl nitriles and from 80 to 55, preferably 80 to 65 weight percent of one or more $C_{4-6}$ conjugated diolefins. Conjugated diolefins have been discussed above. Useful alkenyl nitriles include acrylonitrile and methacrylonitrile.

The acrylate and vinyl ester polymers comprise, in addition to the carboxylic acid:

(1) at least 75 weight percent of a mixture comprising:

(a) from 100 to 50, preferably 100 to 70 weight percent of one or more monomers selected from the group consisting of $C_{1-8}$ alkyl or hydroxy alkyl esters of one or more $C_{3-6}$ ethylenically unsaturated carboxylic acids and $C_{2-8}$ alkenyl and hydroxyalkenyl esters of one or more $C_{1-8}$ saturated carboxylic acids.

(b) up to 50 preferably less than 30 weight percent of one or more of the vinyl aromatic monomers discussed above.

Preferred $C_{1-8}$ alkyl and hydroxyalkyl esters of $C_{3-6}$ ethylenically unsaturated acids include methyl, ethyl, hydroxyethyl, propyl, butyl and ethylhexyl acrylate and methacrylate.

Preferred alkenyl or hydroxyalkenyl esters include vinyl acetate.

These polymers contain no more than 25 preferably less than 15 weight percent of one or more $C_{3-6}$ ethylenically unsaturated carboxylic acids.

The ethylene acrylate, ethylene vinyl acetate type polymers may comprise in addition to the carboxylic acid: from about 40 to 5 preferably from 10 to 25 weight percent of ethylene, propylene or a mixture thereof; and from 60 to 95, preferably from 90 to 75 weight percent of one or more of the above discussed acrylate or vinyl ester monomers.

The vinyl or vinylidene chloride type polymers comprise in addition to the carboxylic acid monomers at least 75 preferably at least 80 weight percent of vinyl or vinylidene chloride and optionally up to 20, preferably up to 15, weight percent of a $C_{1-8}$ alkyl or hydroxy alkyl ester of a $C_{3-6}$ ethylenically unsaturated carboxylic acid.

Optionally, the above polymers may contain a total of up to 10, preferably less than 5 weight percent of one or more additional functional monomers. Suitable additional functional monomers include: $C_{3-6}$ ethylenically unsaturated aldehydes such as acrolein; amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxy alkyl radicals, such as acrylamides, methacrylamide, N-methylol acrylamide, N-methylol methacrylamide and the like; and one or more of the above discussed $C_{1-8}$ alkyl and hydroxy alkyl esters of $C_{3-6}$ ethylenically unsaturated carboxylic acids.

The polymer may be prepared by emulsion polymerization, or by dispersing dry polymer in water. In both cases, the result is an aqueous polymeric dispersion, or a latex. Generally, the latex will contain from 35 to 70, preferably from 50 to 65 weight percent solids.

The present invention contemplates the use of up to 10, typically from 1 to 10, preferably from 2 to 5, most preferably from 2-3 parts by weight of polyhydric alcohol ester of an epoxidized oil or fat per 100 parts by dry weight of polymer. The amount of polyhydric alcohol ester of epoxidized oil or fat used should be controlled. These types of materials also act as plasticizers. If there is too great an excess of polyhydric alcohol ester of epoxidized oil or fat, the plasticization will tend to mask the crosslinking. The amounts of polyhydric esters of epoxidized fatty acid or oil may be determined by routine laboratory experiment to obtain a required balance between crosslinking and plasticization. The degree of plasticization may be countered to an extent by using higher molecular weight polymers.

The epoxides useful in the present invention are epoxides which do not contain terminal epoxy groups. Terminal epoxy groups tend to hydrolyze to hydroxyl groups at acid or alkaline pH. The polyhydric alcohol esters of fatty acids or oils useful in the present invention do not contain terminal hydroxy groups. The polyhydric alcohol preferably contains from 3 to 8 carbon atoms and at least 2, preferably 3 hydroxy radicals per molecule. A particularly useful polyhydric alcohol is glycerine. The ester comprises an epoxidized $C_{12-25}$ preferably $C_{18-25}$ fatty acid or oil, which contains at least two epoxide group, neither of which is a terminal epoxide. Epoxidized vegetable oils are particularly useful as they are commercially available. Preferred oils are epoxidized linseed oil and epoxidized soya oil. Preferred crosslinking agents comprise triglycerides of epoxidized soya bean oil; epoxidized linseed oil or a mixture (either physical blend or a mixed ester.) thereof. There is an advantage to working with such oils. They have a low miscibility with water and this tends to protect the epoxide groups from hydrolysis.

To mix the oil with the latex, the oil may be emulsified with water using an emulsifier which is compatible with the latex. For oil in water emulsions prepared at about room temperatures, applicant has found emulsifiers having an HLB from 13.5 to 15, preferably from 14.5 to 15 are suitable. If the polymer contains a low molecular weight distribution so that at least 15 weight percent, preferably more than 20 weight percent of the polymer has a low molecular weight, it is possible in some instances to swell the polymer with the oil. The term low molecular weight will vary from polymer type to polymer type. Generally, molecular weight below 100,000 most preferably below 60,000 are considered low. It is also possible to prepare very fine emulsions of the epoxidized oil in water using commercially available equipment such as that produced by Microfluidics Corporation, a division of Biotechnology Development Corporation. With such equipment, it is possible to produce oil in water dispersions having a particle size from about 0.3 to about 0.15 microns.

There are commercial publications which list surfactants and some HLB values such as the annual publications, McCutcheon's Detergents and Emulsifiers by the McCutcheon Division of MC Publishing Company. The HLB of an emulsifier or an emulsifier system can be determined experimentally or theoretically. (Giffin W.C., J. Soc. Cosmet. Chem. 1,311 (1949) and 5,249 (1954) and Becher P. Emulsions Theory and Practice 2nd ed. ACS Monographs Ser. No. 162 Reinhold, New York 1965).

The compounds of the present invention may also contain a catalyst to promote the rate of crosslinking. Some catalysts are members of the group consisting of ammonium salts of acids including $C_{1-6}$ aliphatic organic acids; $C_{7-10}$ aromatic organic acids; ammonium chloride, ammonium sulfate, and ammonium salts of sulfamic acids such as ammonium sulfamate. Particularly, preferred catalysts include, ammonium acetate, ammonium salicylate and ammonium chloride, most preferably ammonium acetate. The selection of a specific catalyst will depend on the particular user requirements such as water solubility, and where required, temperature, pH, drying time FDA or BGA approval.

The polymeric dispersions of the present invention may be further compounded with conventional fillers and where required antioxidants, and viscosity control agents. The fillers may be used in amounts up to about 800, typically from 50 to 800, most preferably from 100 to 500 parts by weight per 100 parts by weight of polymer. Typical fillers include talc, calcium carbonate, clay, barytes, titanium dioxide, aluminum hydroxide, plastic reinforcing resins and plastic pigments and opacifiers. The selection and amount of filler will depend on the required properties and application of the polymeric dispersion.

The dispersions of the present invention may be applied to various substrates by conventional means such as casting, coating, spraying, impregnating, saturating and printing. The dispersions are dried using conventional equipment then cured by heating to temperatures from 75 to 150, preferably 100 to 130°C for from 5 to 30, preferably 5-20 minutes.

The compounds of the present invention may be used to treat textiles such as cotton cloth or in the back coating of carpets.

The dispersions of the present invention may also be used to coat, impregnate or saturate non-woven webs. The web may be a natural fiber such as cellulose, lignin, or polyamide as in the case of wool, cotton, flax, silk and wood fibers.

The fiber may be synthetic such as regenerated cellulose, rayon, polyamide such as Nylon 6 or Nylon 66 or a polyester. The web may be a mixture of various fibers.

The web may be relatively open and porous as in diapers or medical bandages or the web may be tight and relatively continuous as in paper. The pick up of impregnated webs may be up to 150, preferably 50-100, weight percent. In tight continuous webs, the coat weight may vary from 1 to 40 gm/m².

The use of aqueous dispersions of polymers as binders for non wovens and as binders for coatings are well known in the art. The particulars of such use are in numerous references and patents such as European Patent 0,012,032.

The following examples are intended to illustrate the invention and not to limit it. In the examples, parts are parts by dry weight unless otherwise specified.

In the following examples, unless otherwise indicated, two base latices were used. Both base latices are commercially available. One latex is a carboxylated styrene butadiene latex with a bound styrene content of 60 percent and about 2 percent carboxylation. The other latex used was a soft acrylate latex with about 4 percent carboxylation. For the simplification of the experiments, the latices will be referred to as X-SB and acrylate respectively in the examples.

Example I - Ratio of Epoxide:

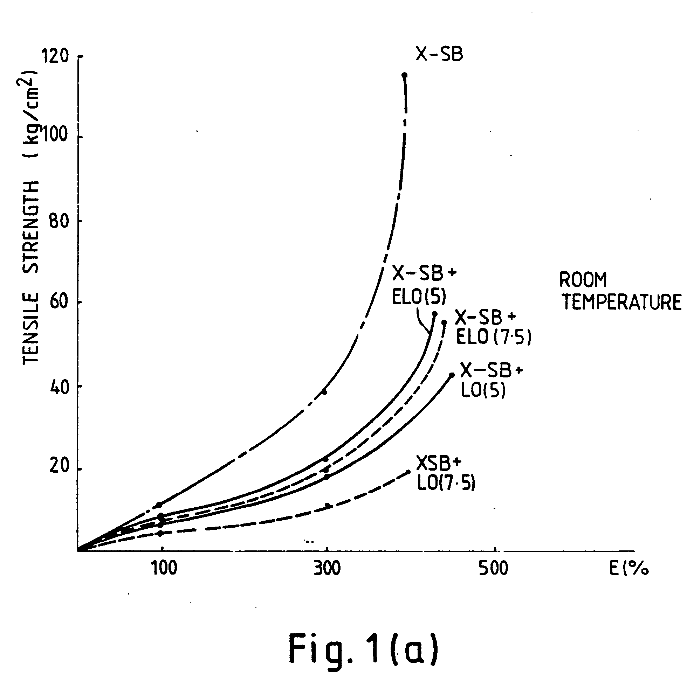

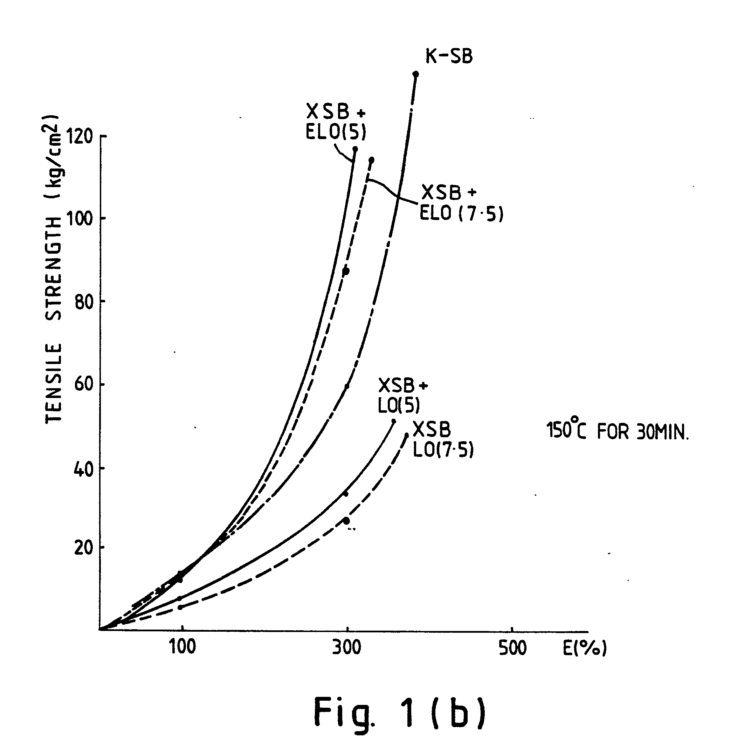

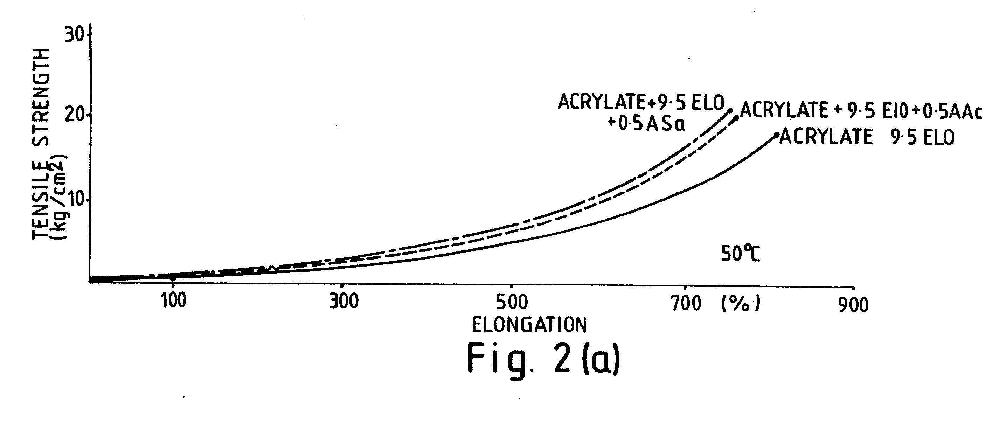

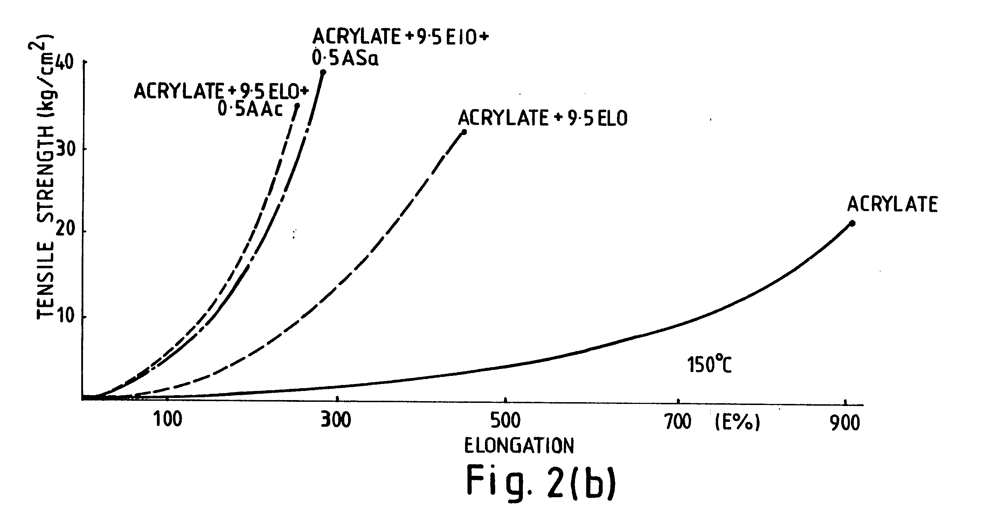

Films were cast from an X-SB latex and the X-SB latex blended with 7.5 and 5 parts of epoxidized linseed oil (ELO) per 100 parts of polymer at a pH of 6 and the X-SB latex binder and 7.5 and 5 parts of linseed oil (LO) per 100 parts of polymer at a pH of 6. The tensile properties (Tensile strength vs. Elongation ) of the resulting films formed at room temperature uncured and cured 30 minutes at 150°C were ploted as Figures 1 (a) and 1 (b) respectively.

Figure 1 shows:

(1) At room temperature the epoxide per se is a plasticizer for the polymer.

(2) On heating, the polymer crosslinks to a certain extent in the presence of epoxidized linseed oil. Free linseed oil plasticizes the polymer.

(3) in view of (1) and (2) above, it is undesirable to use a significant excess of epoxidized linseed oil (ELO) as it will only plasticize the resulting crosslinked polymer.

Example 2 - Catalysis:

Part 1

Films were cast from a series of latices or compounds at a pH of 6 comprising

(i) A carboxylated acrylate latex per se

(ii) The carboxylated acrylate latex + 9.5 part of epoxidized linseed oil (ELO) compound per 100 parts of polymer

(iii) The carboxylated acrylate latex compound + 1.0 parts of ammonium acetate (AAc)

(iv) The carboxylated acrylate latex compound + 1.0 parts of ammonium salicylate per 100 parts of polymer The films were cured for 30 minutes at 50°C and 150°C and the tensile properties of the films were determined. Plots of the results are shown in figure II (a) and (b) respectively.

The results of these experiments show a significant increase in tensile properties of films of the catalysed compound over the non-catalysed compound.

Example 3

A series of Whatman filter papers were impregnated with:
(1) carboxylated acrylate latex
(2) epoxidized linseed oil
(3) a mixture of the latex and a specified amount of epoxidized linseed oil (ELO) per 100 parts of polymer at a specified pH.

The paper was dried and cured and the wet and dry strength of the filter paper was measured as the length of paper (in cm) which would support itself prior to breaking.
The results are set forth below:

TABLE I

| Wet and Dry Tensile Strength of Paper Impregnated with Acrylate Latex Blends at pH 6 | | | |
|---|---|---|---|
| LATEX/BLEND | % PICK UP | WET(CM)x10$^3$ | DRY(CM)x10$^3$ |
| Acrylate | 49.3 | 87.5 | 339.3 |
| ELO | 47.4 | 3.1 | 12.5 |
| Acrylate - 9 ELO | 52.9 | 218.9 | 318.5 |
| Blank Paper | NA | 11.0 | 249.1 |

TABLE II

| Wet and Dry Tensile Strength of Paper Impregnation with Acrylate Blends at pH 8.5 | | | |
|---|---|---|---|
| LATEX/BLEND | % PICK UP | WET (CM) | DRY (CM) |
| Acrylate | 49.3 | 110.9 | 416.5 |
| ELO | 55.6 | 3.2 | 13.1 |
| Acrylate - 9 ELO | 47.0 | 200.4 | 418.7 |
| Blank Paper | NA | 11.0 | 249.1 |

These results and particularly the wet tensile strength show improved crosslinking of the carboxylated acrylate polymer.

Example 4

A carboxylated S-BR latex having a pH of 6, a bound styrene content of about 25 weight percent and a gel content of less than about 40 weight percent was cast as a film as described above. The film was then cured at various times and temperatures and the tensile strength and elongation at break of the film were tested and recorded. The experiment was repeated except that the latex was mixed with 3 parts per 100 parts of polymer of ELO (not as an emulsion) and stirred at 40-50°C for 2 hours. The latex particles swelled with the ELO. Films were cast from the latex and the film was cured under various conditions. The tensile strength and elongation at break of the film were then tested. The latex was also swelled with 3 part of ELO per 100 part of polymer and compounded with 1 part of ammonium acetate (AAc) added as a 10% solution per 100 parts of polymer. The film was cured at various temperatures and the tensile strength and elongation at break of the film were recorded. The results are set forth in Table III.

TABLE III

| Latex | Cure Temp. °C | Cure Time | Ten. Strength Kg/cm² | Elongation at break % |
|---|---|---|---|---|
| Base Latex | Room temp. | 4 days | 6.27 | 800 |
|  | 100 | 30 min. | 7.32 | 856 |
|  | 125 | 30 min. | 9.91 | 696 |
|  | 150 | 30 min. | 10.41 | 650 |
| Latex Swollen with 3 parts ELO | Room temp. | 4 days | 6.44 | 984 |
|  | 100 | 30 min. | 8.45 | 948 |
|  | 125 | 30 min. | 14.69 | 488 |
|  | 150 | 30 min. | 14.84 | 322 |
| Latex Swollen with 3 parts ELO + 1 part A Ac. | Room temp. | 4 days | 6.51 | 1070 |
|  | 50 | 30 min. | 7.04 | 1023 |
|  | 75 | 30 min. | 9.34 | 1003 |
|  | 100 | 30 min. | 12.11 | 983 |
|  | 125 | 30 min. | 16.75 | 707 |
|  | 150 | 30 min. | 21.51 | 413 |

This experiment shows that it is possible to swell low gel polymers with the crosslinking agent.

Example 5

A filter paper was impregnated with a binder system. The filter paper was dried and cured at various temperatures. The paper was then soaked in water 24 hours and the tensile strength, elongation at break and the length of wet paper that would support itself before breaking of the wet paper was recorded. The control binder was the base acrylate latex. The experimental binder was the acrylate plus 3 parts of ELO as an aqueous emulsion, per 100 parts of polymer. The results are set forth in Table IV.

TABLE IV

| Binder | Cure Temp. °C | Cure Time | Tensile Strength kg/cm² | Elong. at Break % | Break Length cm x 10³ |
|---|---|---|---|---|---|
| Control | 20 | 4 days | 12.1 | 7.1 | 9.03 |
| | 75 | 5 min. | 12.8 | 7.2 | 9.55 |
| | 100 | 5 min. | 13.5 | 6.5 | 10.1 |
| | 125 | 5 min. | 17.9 | 6.0 | 12.1 |
| | 150 | 5 min. | 28.8 | 8.0 | 21.5 |
| Control + 3 ELO | 20 | 4 days | 25.6 | 10.8 | 179 |
| | 75 | 5 min. | 26.1 | 11.0 | 194 |
| | 100 | 5 min. | 25.7 | 11.0 | 191 |
| | 125 | 5 min. | 35.6 | 13.3 | 265 |
| | 150 | 5 min. | 35.5 | 14.3 | 265 |

## Claims

1. An aqueous dispersion of a polymer and a curing system having a good pot life and being curable on heating at a temperature from 75 to 150°C for times from 5 to 30 minutes comprising per 100 parts by dry weight of an aqueous dispersion of one or more polymeric solids selected from the group consisting of:

(A) polymers comprising:

(i) 20 to 80 weight percent of one or more $C_{8-12}$ vinyl or vinylidene aromatic monomers which may be unsubstituted or substituted by a chlorine atom or a $C_{1-4}$ alkyl radical;

(ii) from 80 to 20 weight percent of one or more $C_{4-6}$ aliphatic conjugated diolefins which are unsubstituted or substituted by a chlorine atom;

(iii) from 0.5 to 15 weight percent of $C_{3-6}$ one or more ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(c) $C_{1-8}$ alkyl and hydroxyalkyl esters of $C_{3-6}$ ethylenically unsaturated carboxylic acids.

(B) polymers comprising:

(i) 20-45 weight percent of a $C_{3-8}$ alkenyl nitrile;

(ii) from 80 to 55 weight percent of one or more $C_{4-6}$ aliphatic conjugated diolefins which are unsubstituted or substituted by a chlorine atom; and

(iii) from 0.5 to 15 weight percent of $C_{3-6}$ ethylenically unsaturated carboxylic acids or anhydrides

(C) polymers comprising:

(i) at least 75 weight percent of a mixture comprising:

(a) 100 to 50 weight percent of one or more monomers selected from the group consisting of $C_{1-8}$ alkyl and hydroxyl alkyl esters of $C_{3-6}$ ethylenically unsaturated carboxylic acids and $C_{2-8}$ alkenyl and hydroxy alkenyl esters of $C_{1-8}$ saturated carboxylic acids;

(b) up to 50 weight percent of one or more $C_{8-12}$ vinyl or vinylidene aromatic monomers which may be unsubstituted or substituted by a chlorine atom or a $C_{1-4}$ alkyl radical;

(ii) from 0.5 to 25 weight percent of one or more $C_{3-6}$ ethylenically unsaturated carboxylic acids or anhydrides;

(iii) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

EP 0 329 027 A2

(D) polymers comprising:

(i) from 5 to 40 weight percent of a $C_{2-3}$ olefin;

(ii) from 95 to 60 weight percent of one or more monomers selected from the group consisting of $C_{1-8}$ alkyl and hydroxyalkyl esters of $C_{3-6}$ ethylenically unsaturated carboxylic acids and $C_{2-8}$ alkenyl and hydroxy alkenyl esters of $C_{1-8}$ saturated carboxylic acids;

(iii) from 0.5 to 15 weight percent of $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

(E) polymers comprising:

(i) at least 75 weight percent of one or more monomers selected from the group consisting of vinyl chloride and vinylidene chloride; and

(ii) up to 20 weight percent of one or more monomers selected from the group consisting of $C_{1-8}$ alkyl and hydroxyalkyl esters of $C_{3-6}$ ethylenically carboxylic acid;

(iii) from 0.5 to 25 weight percent of one or more $C_{3-6}$ ethylenically unsaturated carboxylic acids or anhydrides; and

(iv) optionally up to 10 weight percent of one or more monomers selected from the group consisting of:

(a) $C_{3-6}$ ethylenically unsaturated aldehydes;

(b) amides of $C_{3-6}$ ethylenically unsaturated carboxylic acids, which amides may be unsubstituted or substituted at the nitrogen atom by up to two radicals selected from the group consisting of $C_{1-4}$ alkyl and hydroxyalkyl radicals; and

up to 10 parts by weight per 100 parts by weight of said polymer of one or more epoxy compounds which is a polyhydric alcohol esters of non-terminal epoxides of $C_{12-25}$ fats or oils containing at least two epoxy groups per ester chain.

2. A dispersion according to Claim 1, wherein said polyhydric alcohol ester is a triglyceride of an epoxidized $C_{18-25}$ fatty acid or oil.

3. A dispersion according to Claim 2, wherein said epoxy compound is used in the form of an emulsion stabilized with a surfactant having an HLB from 13.5 to 15.

4. A dispersion according to Claim 3, wherein said epoxy compound is selected from the group consisting of glyceride esters of epoxidized linseed oil and epoxidized soya oil.

5. A dispersion according to Claim 4, wherein said epoxy compound is present in an amount from 2 to 5 parts by weight per 100 parts by weight of polymer.

6. A process according to Claim 5 wherein said epoxy compound is prepared as an emulsion of oil in water having a particle size from about 0.3 to about 0.15 microns.

7. A dispersion according to Claim 5, further comprising from 0.1 to 5 parts by weight per 100 parts by weight of polymer of a catalyst selected from the group consisting of ammonium salts of weak $C_{1-6}$ aliphatic organic acids; weak $C_{7-10}$ aromatic acids; ammonium chloride; and ammonium sulfonate.

8. A dispersion according to Claim 6, further comprising from 0.1 to 5 parts by weight per 100 parts by weight of polymer of a catalyst selected from the group consisting of ammonium salts of weak $C_{1-6}$ aliphatic organic acids; weak $C_{7-10}$ aromatic acids; ammonium chloride; and ammonium sulfonate.

9. A dispersion according to Claim 7, wherein said catalyst is selected from the group consisting of ammonium acetate and ammonium salicylate.

10. A dispersion according to Claim 8, wherein said catalyst is selected from the group consisting of ammonium acetate and ammonium salicylate.

11. A dispersion according to Claim 7, which when spread on a substrate or cast as a film, is capable of being cured on heating at a temperature from 100 to 130° C for a time of from 10 to 20 minutes.

12. A dispersion according to Claim 8, which when spread on a substrate or cast as a film, is capable of being cured on heating at a temperature from 100 to 130° C for a time of from 5 to 15 minutes.

13. A dispersion according to Claim 7, wherein said polymer comprises 80 to 20 percent of one or more monomers selected from the group consisting of styrene and alpha methyl styrene;

20 to 80 weight percent of one or more monomers selected from the group consisting of butadiene, isoprene, and chloroprene;

0.5 to 8 weight percent of one or more monomers selected from the group consisting of acrylic acid, methacrylic acid, fumaric acid, and itaconic acid; and optionally up to 5 weight percent of one or more

10

monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

14. A dispersion according to Claim 8, wherein said polymer comprises 80 to 20 percent of one or more monomers selected from the group consisting of styrene and alpha methyl styrene;

20 to 80 weight percent of one or more monomers selected from the group consisting of butadiene, isoprene, and chloroprene;

0.5 to 8 weight percent of one or more monomers selected from the group consisting of acrylic acid, methacrylic acid, fumaric acid, and itaconic acid; and optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

15. A dispersion according to Claim 7, wherein said polymer comprises at least 85 weight percent of a mixture consisting of:

from 100 to 70 weight percent of one or more monomers selected from the group consisting of methyl acrylate, ethyl acrylate, hydroxyethyl acrylate, butyl acrylate, ethylhexyl acrylate, methyl methacrylate, ethyl methacrylate, hydroxyethyl methacrylate, butyl methacrylate, ethylhexyl methacrylate and vinyl acetate; and up to 30 weight percent of one or more monomers selected from the group consisting of styrene and alpha methyl styrene; and

up to 15 weight percent of one or more monomers selected from the group consisting of acrylic acid, methacrylic acid, fumaric acid and itaconic acid; and optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

16. A dispersion according to Claim 7, wherein said polymer comprises at least 85 weight percent of a mixture consisting of:

from 100 to 70 weight percent of one or more monomers selected from the group consisting of methyl acrylate, ethyl acrylate, hydroxyethyl acrylate, butyl acrylate, ethylhexyl acrylate, methyl methacrylate, ethyl methacrylate, hydroxyethyl methacrylate, butyl methacrylate, ethylhexyl methacrylate and vinyl acetate; and up to 30 weight percent of one or more monomers selected from the group consisting of styrene and alpha methyl styrene; and

up to 15 weight percent of one or more monomers selected from the group consisting of acrylic acid, methacrylic acid, fumaric acid and itaconic acid; and optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

17. A dispersion according to Claim 7, wherein said polymer comprises:

(i) from 5 to 25 weight percent of ethylene or propylene or a mixture thereof;

(ii) from 95 to 75 weight percent of one or more monomers selected from the group consisting of methyl acrylate, ethyl acrylate, hydroxy ethyl acrylate, butyl acrylate, ethylhexyl acrylate, methyl methacrylate, ethyl methacrylate, hydroxyethyl, methacrylate, butyl methacrylate, ethyl hexyl methacrylate and vinyl acetate; and

(iii) from 0.5 to 8 weight percent of one or more monomers selected from the group consisting of acrylic acid, methacrylic acid, itaconic acid, and fumaric acid; and

(iv) optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

18. A dispersion according to Claim 8, wherein said polymer comprises:

(i) from 5 to 25 weight percent of ethylene or propylene or a mixture thereof;

(ii) from 95 to 75 weight percent of one or more monomers selected from the group consisting of methyl acrylate, ethyl acrylate, hydroxy ethyl acrylate, butyl acrylate, ethylhexyl acrylate, methyl methacrylate, ethyl methacrylate, hydroxyethyl, methacrylate, butyl methacrylate, ethyl hexyl methacrylate and vinyl acetate; and

(iii) from 0.5 to 8 weight percent of one or more monomers selected from the group consisting of acrylic acid, methacrylic acid, itaconic acid, and fumaric acid; and

(iv) optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

19. A dispersion according to Claim 7, wherein said polymer comprises:
(i) at least 80 weight percent of vinyl or vinylidene chloride;
(ii) up to 15 weight percent of a monomer selected from the group consisting of methyl acrylate, ethyl acrylate, hydroxyethyl acrylate, butyl acrylate, ethylhexyl acrylate, methyl methacrylate, ethyl methacrylate, hydroxyethyl methacrylate, butyl methacrylate and ethylhexyl methacrylate;
(iii) from 0.5 to 8 weight percent of one or more polymers selected from the group consisting of acrylic acid, methacrylic acid, itaconic acid, and fumaric acid; and
(iv) optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

20. A dispersion according to Claim 8, wherein said polymer comprises:
(i) at least 80 weight percent of vinyl or vinylidene chloride;
(ii) up to 15 weight percent of a monomer selected from the group consisting of methyl acrylate, ethylacrylate, hydroxyethyl acrylate, butyl acrylate, ethylhexyl acrylate, methyl methacrylate, ethyl methacrylate, hydroxyethyl methacrylate, butyl methacrylate, and ethylhexyl methacrylate;
(iii) from 0.5 to 8 weight percent of one or more polymers selected from the group consisting of acrylic acid, methacrylic acid, itaconic acid, and fumaric acid; and
(iv) optionally up to 5 weight percent of one or more monomers selected from the group consisting of acrylamide, methacrylamide, N-methylol acrylamide, N-methylol methacrylamide, acrolein, and methyl, ethyl, hydroxy ethyl and ethyl hexyl acrylates and meth acrylates.

21. A composition comprising per 100 parts by weight of a dispersion according to Claim 1 from 50 to 800 parts by weight of one or more fillers selected from the group consisting of talc, calcium carbonate, clay barytes, tetanium dioxide, aluminum hydroxide plastic reinforcing resin, plastic pigments and opacifiers and mica.

22. A non woven substrate coated, saturated or impregnated with a composition according to Claim 1.

23. A non woven substrate coated, saturated or impregnated in a composition according to Claim 7.

Fig. 1(a)

Fig. 1 (b)

Fig. 2 (a)

EP 0 329 027 A2

37290

)050/97290

Fig. 2(b)